# EUROPEAN PATENT SPECIFICATION

(11) **EP 2 158 805 B1**
(45) Date of publication and mention of the grant of the patent: **02.11.2011**
(21) Application number: 08105135.1
(22) Date of filing: 26.08.2008
(51) Int. Cl.: A01G 3/033, A01G 3/037, B26B 15/00

(54) **Vegetation cutting tool**
Schneidwerkzeug für Pflanzen
Outil de découpe de végétaux

(43) Date of publication of application: 03.03.2010
(73) Proprietor: Robert Bosch GmbH, 70442 Stuttgart (DE)
(72) Inventor: Quigley, Andrew, Matlock Derbyshire DE4 4LS (GB); Poole, Richard, Ipswich Suffolk IP32 7LR (GB); Butcher, Nicholas, Ipswich Suffolk IP3 0BB (GB); Denysov, Andriy, Southall Middlesex UB1 3AW (GB)

(56) References cited:
- WO-A-89/03171
- US-A- 3 408 875
- US-A- 6 044 564
- US-A1- 2005 160 606

## Description

### FIELD OF THE INVENTION

The present invention relates to a vegetation cutting tool. In particular, the present invention relates to a powered vegetation cutting tool and more particularly to a linkage mechanism for a powered vegetation cutting tool.

### BACKGROUND OF THE INVENTION

Vegetation cutting tools such as pruning tools and secateurs are well known for use in cutting plant stems and trees and shrub branches. There are three basic types of secateur: "anvil", which comprise a single blade that can be moved against a flat surface to cut a stem; "bypass", which usually comprise a pair of blades (often just one of the blades has a cutting surface) that are operated like a pair of scissors, and which provide a shearing force to cut the stem as the blades are moved passed each other; and "parrot-beak", which are also operable like a pair of scissors and which comprise a pair of concave blades, between which a stem can be trapped and cut.

Pruning tools may be manually operated or driven, usually by an electrical motor. Powered pruning tools operate to move at least one blade of a pair of blades between an open configuration, in which cutting edges of the moveable blade and a fixed blade are apart, and a closed configuration, in which the cutting edges of the blades abut or just pass one another. If powered cutting action is conducted in response to the actuation of an external user-control in the form of a button or trigger. When the user-control is released, the blades return to the open configuration. Typically, this is achieved by a reduction gearbox driving a partial gear segment on the moving blade.

For example, EP 803187 A2 describes a set of pruning shears which have two relatively adjustable cutting blades, one of which is secured to the housing of the shears, the other operated by an electric motor. The fixed blade is secured with a threaded spindle, a spindle nut and a displacement rod. The operation of the electric motor is controlled via a control switch with a pair of switch elements inserted in the electric motor current circuit. The spindle nut has a cam guide for control cams associated with the switch elements.

Electric scissors are also known. However, these devices operate by reciprocating the blades repeatedly to perform a sequence of cutting and opening movements. Unlike pruning tools, the scissor blades operate in a continuous manner without the need for a stop/reverse function. For example, US 2005/0160606 A1 describes a pair of electric scissors comprised of a casing, a motor, a driving disk, a crank, and a cutting unit with a pair of blades. The driving disk, crank and blades of the cutting unit are connected pivotally and eccentrically. The motor is installed with a speed change means so that the rotation speed of the motor, and thus the rotary shaft, can be reduced to provide a higher torsion force for cutting tougher objects.

Whilst the construction describe in US 2005/0160606 A1 is appropriate for light duty use, its overhung loads and continuous operation make it unsuitable for pruning tools which utilise a single cutting operation that requires a far greater torsion force for the cutting operation.

The present invention seeks to overcome at least some of these disadvantages.

WO89/03171 describes a vegetation cutting tool in accordance with the preamble to claim 1.

### SUMMARY OF THE INVENTION

Accordingly, the present invention provides a vegetation cutting tool as claimed in Claim 1.

Preferably, the transmission means further comprises a reduction gear assembly, including an output bearing, which is drivable by the motor, and in which the crank is drivable by the gear assembly.

Preferably, the first cutter member comprises a cutting surface having a sharpened leading edge.

In one embodiment, the first cutter member is moveable in a plane parallel and adjacent to the plane in which the second cutter member lies, and is arranged to be slidably drivable over a surface of the second cutter member.

In an alternative embodiment, the first and second cutter members are arranged such that the cutting surface of the first cutter member is drivable against a cutting surface of the second cutter member.

Preferably, the engagement means comprises a tab formed on the first cutter member. Preferably, the Link comprises a slot which is operatively engageable with the tab.

Suitably, the vegetation cutting tool comprises a user-control for activating the motor. Preferably, the user-control provides a non-continuous activation of the motor, in use. Preferably, the user-control is moveable between first and second positions to effect movement of the first moveable member between the first and second angular positions, and wherein release of the user-control, in use, causes the first cutter member to move to the first angular position

Preferably, the user-control comprises a trigger. Preferably, the release of the trigger, in use, causes the first cutter member to return to the first angular position.

Suitably, the crank comprises a crank body and crank arm. Preferably, the crank body is operatively coupled to an output shaft of the motor or reduction gearbox. Preferably, the crank is operatively connected to the link such that the connection is substantially in-line with the gear assembly output bearing.

Preferably, the motor is a direct current motor.

Preferably, the vegetation cutting tool is battery-powered. Preferably, the battery is rechargeable; more preferably, the battery is a lithium-ion battery.

Suitably, the vegetation cutting tool further comprises one or more limit switches. At least one limit switch breaks the supply of power to the motor when the at least one of said cutter members has moved from said first angular position to said second angular position, in operation. Preferably, the one or more limit switches enable a short circuit across the motor terminals when the at least one of said cutter members has moved from said first angular position to said second angular position, in use. Preferably, the one or more limit switches activate relays to make or break the motor electrical connections, in use. Preferably, two relays are activated, in use. Preferably, the two relays are formed as a single twin-relay component.

Preferably, the gearbox is an epicyclic unit mounted coaxially to the motor. Suitably, the gearbox has a reduction ratio of between 300:1 and 700: 1; preferably, between 400:1 and 600:1; more preferably about 516:1. Preferably, the reduction is carried out by means of a four stage assembly.

Suitably, the first cutter member is pivotably mounted with respect to the second cutter member by a pin and pivot bush. Preferably, the first cutter member is demountable. Suitably, the first cutter member is demountable by means of removal of the pin and pivot bush.

Suitably, the link further comprises an integral link tab, formed therewith, and the link tab is moveable within the channel in the linkage mounting moulding.

Preferably, the link comprises a link aperture at an operatively upper end which is rotatably engaged with the crank to provide a mechanical engagement between the link and crank.

Preferably, the cutting head and transmission means comprises a single working unit.

Suitably, the pin is a screw or threaded fixing, such as a bolt.

### BRIEF DESCRIPTION OF THE DRAWINGS

The above and other aspects of the present invention will now be illustrated in further detail, by way of example only, with reference to the accompanying drawings in which:
- Figure 1: is a perspective view of an embodiment of a vegetation cutting tool in accordance with the invention;
- Figure 2: is a perspective view of the principal components of the operating mechanism of the embodiment of Figure 1, in which the cutter members are in a first position;
- Figure 3: is a perspective view of the principal components of the operating mechanism of the Figure 1, in which the cutter members are in a second position;
- Figure 4: is an exploded simplified perspective view of the mechanism of the embodiment of Figure 1;
- Figure 5: is an exploded detailed perspective view of the mechanism of the embodiment of Figure 1;
- Figure 6: is an alternative exploded detailed perspective view of the mechanism of the embodiment of Figure 1; and
- Figure 7: is a graph depicting blade movement as a function of crank movement.

### DETAILED DESCRIPTION OF THE INVENTION

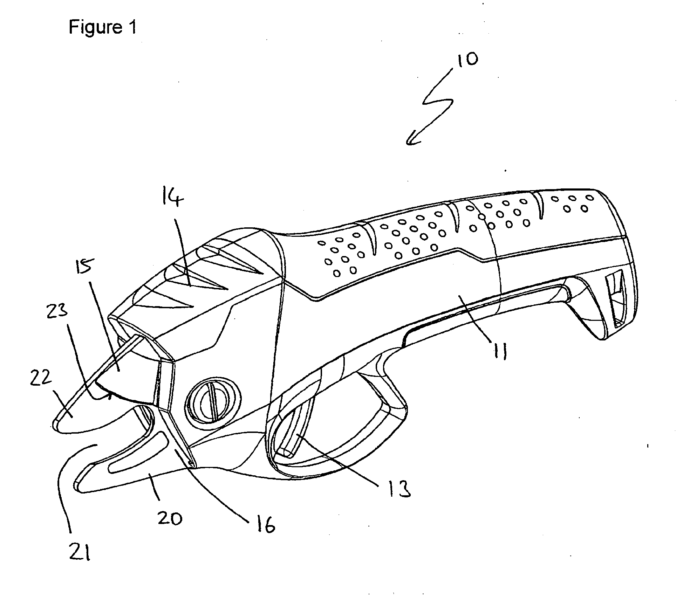

Referring to Figure 1, there is shown a vegetation cutting tool in the form of a pruner 10 generally of the bypass type and comprising an elongate handle 11 including a user-control in the form of a trigger 13. Handle 11 further includes a cutting head 14 located at a front end of handle 11, the cutting head 14 comprising a moveable cutter member 15 and a fixed cutting head element in the form of a plate 16. Plate 16 comprises a fixed cutting member 20 and a vegetation guide 22 forming a vegetation-receiving channel 21 therebetween.

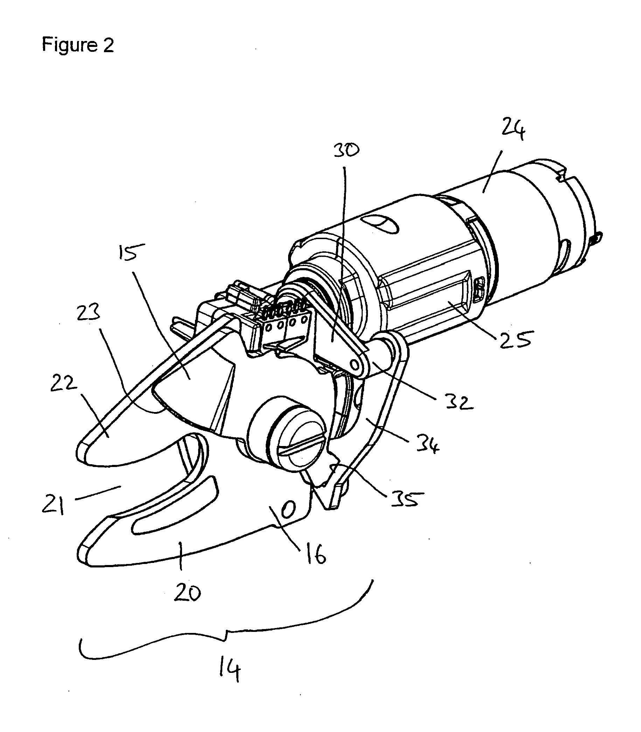

Moveable cutter member 15 includes a sharpened leading or cutting edge 23 and is pivotally drivable, in use, between retracted and extended positions by a motor (24 in Figure 2). When the moveable cutter member 15 is in the retracted position, as shown in Figure 1, moveable and fixed cutter members 15,20 are operatively spaced, and the sharpened leading edge is retracted and protected by vegetation guide 22, and vegetation-receiving channel 21 is open.

In use, the action of driving moveable cutter member 15 towards the fixed cutter member 20 and particularly its unsharpened leading edge 54 provides a shearing action therebetween in the manner of a bypass-type pruner. That shearing action can be used to cut any vegetation which has been located within the vegetation-receiving channel 21. In alternative embodiments, the action of driving the moveable cutter member 15 towards the fixed cutter member 20 provides a simple cutting force therebetween, in which a sharpened leading edge of the moveable cutter member 15 forces the article to be cut against the fixed cutter member 20 to thereby cut the article in the manner of a anvil-type pruner.

In the illustrated embodiment, the fixed cutter member 20 is not moveable. However, in alternative embodiments (not shown) second cutter member 20 is reciprocally drivable relative to the moveable cutter member 15.

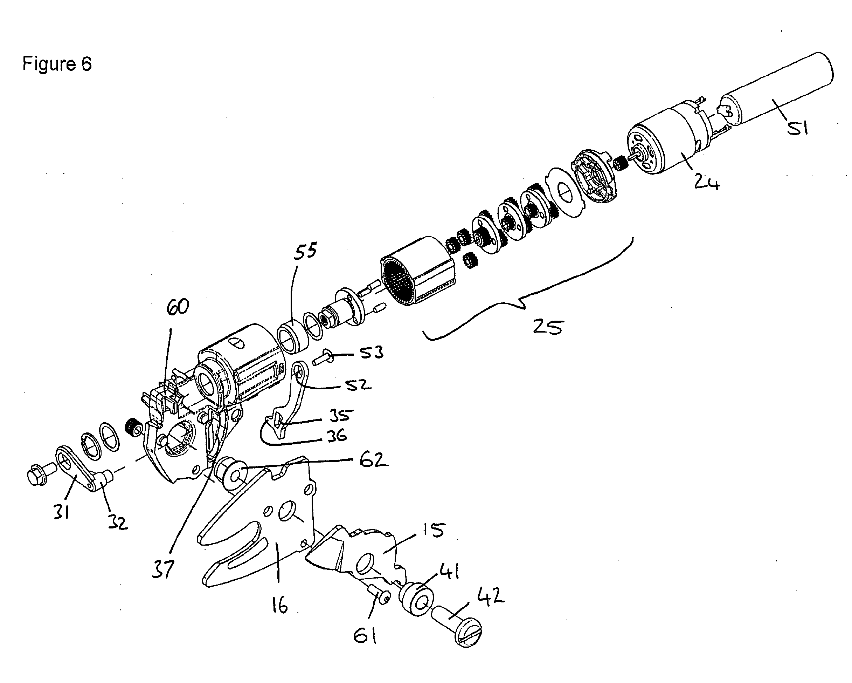

Figure 2 shows the assembled mechanism of the pruner 10 with the moveable cutter member 15 in a retracted position, leaving vegetation-receiving channel 21 open for receipt of vegetation. The mechanism includes a motor 24 connected coaxially to a gearbox unit 25. The gearbox unit 25 is suitably a four-stage epicyclic gearbox (see Figure 6) which provides a reduction in the motor speed in the ratio of around 516:1. A crank 30 is rotatably attached to the gearbox output shaft (obscured), and comprises a crank body 31 and crank arm 32. Crank body 31 is connected to the output shaft of the gearbox unit 25. In the embodiment shown, crank arm 32 is orientated to extend backwards towards the gearbox at its outer end, such that a point of connection with the cutting head is substantially in line with an end bearing 55 of the gearbox. As a result, any overhung bearing loads on the output shaft are reduced.

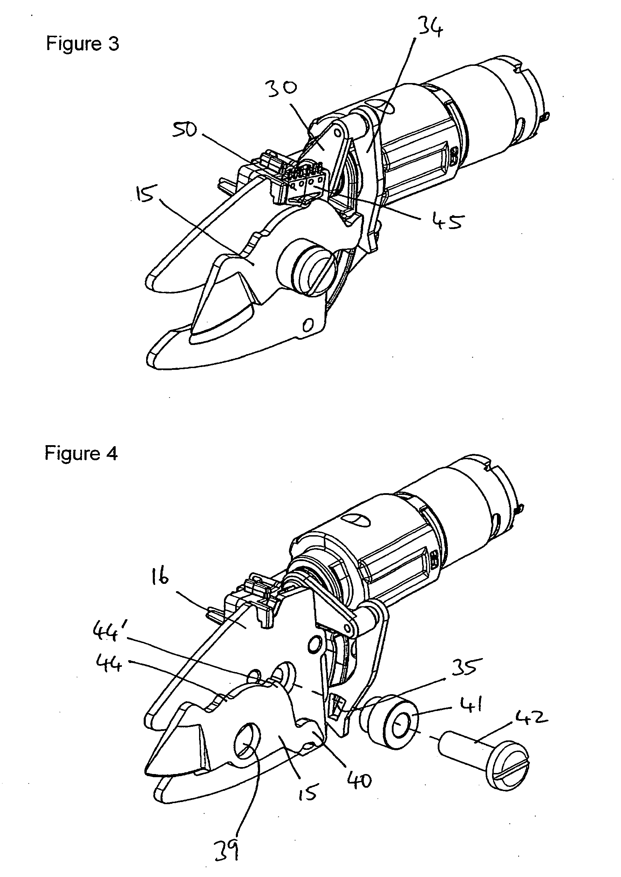

As can be seen most clearly in Figure 4, moveable cutter member 15 includes an aperture 39 through which a pivot bush 41 is inserted and secured by pin in the form of a bolt 42 to mount moveable cutter member 15 pivotally upon plate 16 about a pivot point defined by the outer surface of pivot bush 41. Moveable cutter member 15 5 includes a tab 40.

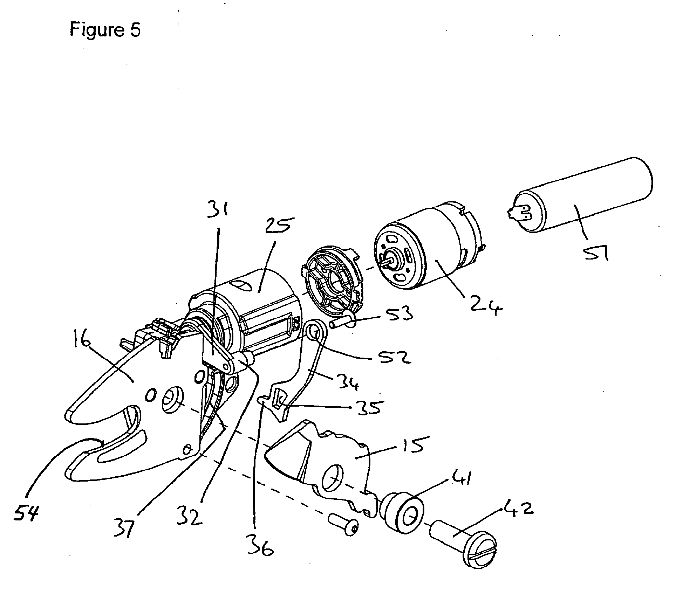

As best shown in Figure 5 and 6, the mechanism further includes a link 34 which links crank arm 32 to the moveable cutting member 15. Link 34 includes a link aperture 52 at an operatively upper end (Figure 5) which rotatably engages with crank arm 32 to provide a mechanical engagement between the link 34 and crank 30. The link 34 is retained on the crank arm 32 by a threaded bolt, or screw 53. The link 34 also includes a slot 35 provided at an operatively lower end of link 34 which operatively engages with the moveable cutter member 15 through tab 40.

In Figure 6, the complete linkage assembly is shown. The linkage assembly is formed as a 'self-contained' unit around a linkage mounting moulding 60. Plate 16 is securely fixed to the linkage mounting moulding 60 by suitable securing means, for example a screw 61. As discussed above, moveable blade 15 is rotatably mounted on plate 16 by pivot bush 41 and pin 42. As can be seen in exploded Figure 6, pin 42 passes through moveable blade 15 and plate 16 and fastens into captive nut 62 which is retained between the linkage mounting moulding 60 and plate 16.

The gear assembly, incorporating the output bearing 55 is housed within the linkage mounting moulding 60 to provide the 'self-contained' unit. Furthermore, the linkage mounting moulding 60 includes a groove or channel 37 in which a portion of the link 34 is moveable, and which restricts the range of movement of the link 34, during normal operation. In preferred embodiments, link 34 comprises a protrusion or link tab 36 which is moveable within channel 37 of the linkage mounting moulding 60.

Accordingly, in use, rotation of crank 30 by means of motor 24 causes link 34 to move in an upwards direction (in terms of the orientation shown in the Figures). As a result, the link 34 acts on the moveable cutter member 15, through the slot-tab engagement, to cause moveable cutter member 15 to rotate about the pivot point. The offset formed between crank body 31 and crank arm 32 has the effect that its engagement with the link 34 is substantially in-line with the gearbox output shaft bearing 55. This arrangement reduces the occurrence of bending loads on the gearbox output shaft and removes the need for additional load-carrying bearings.

Moveable cutter member 15 also includes profiles 44,44' which, in use, sequentially actuate a pair of electrical limit switches 45,50 located on or adjacent plate 16, in response to the moveable cutter member being moved between retracted and extended positions. In particular, when the moveable cutter member is moved between the two positions, the profiles act upon electrical limit switches 45,50 to indicate to the pruner control electronics (omitted for clarity) that the cutter member has reached the respective fully retracted or extended position. This causes the power supplied to the motor to be switched off, suitably, by means of electrical relays (not shown). Preferably, when the power to the motor is switched off a short-circuit is also applied to the motor terminals to provide a rapid braking effect upon the cutter member.

A limit to the angular movement of crank 30 is provided by mechanical means, in this case by contact between the crank and a linkage mounting moulding of the pruner (not shown). In preferred embodiments, movement of the link 34, and thus the crank 30 and moveable cutter member 15, is restricted due to the constraints imposed by the operative engagement of the integral link tab 36 of link 34 within channel 37 provided in the linkage mounting moulding (Figure 6)

Referring now to Figure 3 there is shown a view of the mechanism in which the moveable cutter member 15 is in an extended position. As shown, activation of trigger 13 has caused the motor 24 to be energised to rotate the crank arm 30 through an angle of around 75 to 80 degrees. As a consequence, the closed limit switch 45 has been actuated by engagement with profile 44' of cutter member 15 and power to the motor has been switched off. Ideally, the motor terminals have been short-circuited to achieve a braking effect. In preferred embodiments, the mechanism remains in this closed configuration until trigger 13 is released by the user.

The angular movement of crank 30 is also restricted by further mechanical means, such as by contact between the moving blade and the linkage mounting moulding of the pruner adjacent to the tab 40 (not shown). Alternative assemblies such as engagement of a portion of link 34 and the linkage mounting moulding surface around the gearbox output bearing 55 can be used.

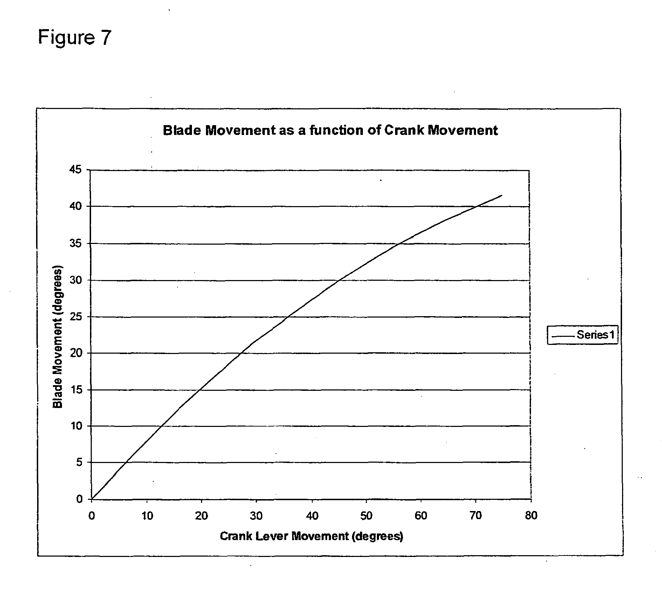

As illustrated in Figure 7, the linkage mechanism described provides a mechanical advantage defined by the ratio between crank arm 32 angular rotation and moving blade (moveable cutter member) angular rotation. This mechanical advantage is variable throughout the cutting stroke of the moveable cutter member 15. A particular advantage of this arrangement is that the cutting force available to a branch of a particular diameter is then the same regardless of whether the branch is engaged by the moveable cutter member close to its pivot point (and therefore at a smaller moveable cutter member angular movement) or at its tip (and therefore at a greater moveable cutter member angular movement).

A further advantage of the described linkage mechanism is that the moveable cutter member 15 is easily demountable for sharpening or replacement. As shown in Figure 4, this is achieved by removing the bolt 42 and pivot bush 41 whereupon the moveable cutter member can be demounted from the tool by removing its tab 40 from the slot 35 at the lower end of link 34. Advantageously, when the user removes or replaces the moveable cutter member, the operative engagement of link tab 36 within channel 37 provided in the linkage mounting moulding, ensures that the link 34 is appropriately retained in its correct position.

The linkage mechanism provides a low cost, compact and mechanically efficient design. It is especially suitable for application in portable battery-powered tools, such as pruners, in which the mechanism forms a self-contained working element formed around and located to a linkage mounting moulding within the moulding of the case in which the pruner is housed.

The pruner is ideally powered by one or more lithium-ion cells 51, due to their relative lightness in weight. The high efficiency of the mechanism means that the pruner tool can even be used with a single battery cell for cutting material up to 14mm in diameter. For example, a suitable battery cell of 3.6 Volt, 1.3 Ah could achieve around 400 cuts of 12mm diameter vegetation before recharging was required. In preferred embodiments, control electronics for the motor and or limit switch operations are also utilised to provide lithium-ion battery monitoring and controlling functions. For example, it may be desired to disable operation of the motor in the event that the battery becomes discharged below a pre-selected voltage or its temperature exceeds a predefined limit.

## Claims

1. A vegetation cutting tool comprising a cutting head (14), a motor (24) and transmission means drivable by the motor;
wherein the cutting head (14) comprises first and second cutter members having respective cutting surfaces (23,54), wherein the first cutter member (15) is pivotably mounted with respect to the second cutter member (20);
wherein at least the first cutter member (15) is drivable by the transmission means between a first angular position with respect to the second cutter member (20), in which a space is formed between the respective cutting surfaces (23,54), and a second angular position with respect to the second cutter member (20), in which the space between the respective cutting surfaces (23,54) is closed; and
wherein the transmission means (25) comprises engagement means (40) associated with the first cutter member (15), and a crank (30) drivable between defined first and second angular crank positions corresponding to the first and second angular positions, in which the crank (30) is operatively coupled to the engagement means (40) by a link (34); **characterised in that** the first cutter member (15) is demountable by means of disengagement of the engagement means (40) from the link (34); the link (34) is retained in position when the first cutter member (15) is removed; and further **characterised in that** the cutting head comprises a linkage mounting moulding (60), and the link (34) is moveable within a channel (37) provided in the linkage mounting moulding (60), to retain its position relatively with the linkage mounting moulding (60).

2. A vegetation cutting tool as claimed in claim 1, wherein the link (34) further comprises an integral link tab (36), formed therewith, and the link tab (36) is moveable within the channel (37) in the linkage mounting moulding (60).

3. A vegetation cutting tool as claimed claim 1 or claim 2, wherein the link (34) comprises a link aperture (52) at an operatively upper end which is rotatably engaged with the crank (30) to provide a mechanical engagement between the link (34) and crank (30).

4. A vegetation cutting tool as any one of claims 1 to 3, wherein the transmission means further comprises a reduction gear assembly (25), including an output bearing (55), which is drivable by the motor, and in which the crank is drivable by the gear assembly (25).

5. A vegetation cutting tool as claimed in any one of claims 1 to 4, wherein the engagement means comprises a tab (40) formed on the first cutter member (15).

6. A vegetation cutting tool as claimed in claim 5, wherein the link comprises a slot (35) which is operatively engageable with the tab (40).

7. A vegetation cutting tool as claimed in any one of the preceding claims, further comprising a user-control for non-continuous activation of the motor (24), wherein the user-control is moveable between first and second positions to effect movement of the first moveable member (15) between the first and second angular positions, and wherein release of the user-control, in use, causes the first cutter member (15) to move to the first angular position.

8. A vegetation cutting tool as claimed in any one of claims 4 to 7, wherein the crank (30) is operatively connected to the link (34) such that the connection is substantially in-line with the gear assembly output bearing (55).

9. A vegetation cutting tool as claimed in any one of the preceding claims, wherein the vegetation cutting tool further comprises one or more limit switches (45,50) and wherein at least one limit switch (45,50) breaks the supply of power to the motor (24) when the at least one of said cutter members (15) has moved from said first angular position to said second angular position.

10. A vegetation cutting tool as claimed in any one of the preceding claims, further comprising two limit switches (45,50), each associated with a relay to make or break motor electrical connections, wherein the relays are a single twin relay.

11. A vegetation cutting tool as claimed in any one of claims 4 to 10, wherein the reduction gear assembly (25) is an epicyclic reduction gear assembly mounted coaxially to the motor.

12. A vegetation cutting tool as claimed in any one of the preceding claims, wherein the cutting head (14) and transmission means comprises a single working unit.

## Patentansprüche

1. Vegetationsschneidwerkzeug mit einem Schneidkopf (14), einem Motor (24) und einem mit dem Motor antreibbaren Kraftübertragungsmittel,
wobei der Schneidkopf (14) ein erstes und ein zweites Schneidvorrichtungselement mit jeweiligen Schneidflächen (23, 54), wobei das erste Schneidvorrichtungselement (15) schwenkbar bezüglich des zweiten Schneidvorrichtungselements (20) montiert ist,
wobei mindestens das erste Schneidvorrichtungselement (15) durch das Kraftübertragungsmittel zwischen einer ersten Winkelposition bezüglich des zweiten Schneidvorrichtungselements (20), in der ein Raum zwischen den jeweiligen Schneidflächen (23, 54) gebildet ist, und einer zweiten Winkelposition bezüglich des zweiten Schneidvorrichtungselements (20) antreibbar ist, in der der Raum zwischen den jeweiligen Schneidflächen (23, 54) geschlossen ist, und
wobei das Kraftübertragungsmittel (25) ein Eingriffsmittel (40), das dem ersten Schneidvorrichtungselement (15) zugeordnet ist, und eine Kurbel (30) umfasst, die zwischen einer definierten ersten und einer definierten zweiten Winkelkurbelposition antreibbar ist, wobei diese Winkelkurbelpositionen der ersten und der zweiten Winkelposition entsprechen, in der die Kurbel (30) über eine Stange (34) an das Eingriffsmittel (40) wirkgekoppelt ist, **dadurch gekennzeichnet, dass** das erste Schneidvorrichtungselement (15) durch Ausrücken des Eingriffsmittels (40) aus der Stange (34) abmontiert werden kann, dass die Stange (34) in Position gehalten wird, wenn das erste Schneidvorrichtungselement (15) entfernt ist, und weiter **dadurch gekennzeichnet, dass** der Schneidkopf einen Gestängemontageformkörper (60) umfasst und die Stange (34) in einem Kanal (37) beweglich ist, der in dem Gestängemontageformkörper (60) vorgesehen ist, um seine Position bezüglich des Gestängemontageformkörpers (60) beizubehalten.

2. Vegetationsschneidwerkzeug nach Anspruch 1, wobei die Stange (34) ferner eine damit ausgebildete integrale Stangenlasche (36) umfasst und die Stangenlasche (36) im Kanal (37) im Gestängemontageformkörper (60) beweglich ist.

3. Vegetationsschneidwerkzeug nach Anspruch 1 oder 2, wobei die Stange (34) eine Stangenöffnung (52) an einem betriebsmäßig oberen Ende umfasst, die drehmäßig mit der Kurbel (30) in Eingriff steht, um einen mechanischen Eingriff zwischen der Stange (34) und der Kurbel (30) bereitzustellen.

4. Vegetationsschneidwerkzeug nach einem der Ansprüche 1 bis 3, wobei das Kraftübertragungsmittel ferner eine Untersetzungsgetriebeanordnung (25) mit einem Abtriebslager (55) umfasst, das mit dem Motor antreibbar ist und in dem die Kurbel durch die Getriebeanordnung (25) antreibbar ist.

5. Vegetationsschneidwerkzeug nach einem der Ansprüche 1 bis 4, wobei das Eingriffsmittel eine Lasche (40) umfasst, die am ersten Schneidvorrichtungselement (15) ausgebildet ist.

6. Vegetationsschneidwerkzeug nach Anspruch 5, wobei die Stange einen Schlitz (35) umfasst, der mit der Lasche (40) in Wirkeingriff gebracht werden kann.

7. Vegetationsschneidwerkzeug nach einem der vorhergehenden Ansprüche, ferner mit einer Benutzersteuerung für diskontinuierliche Betätigung des Motors (24), wobei die Benutzersteuerung zwischen einer ersten und einer zweiten Position beweglich ist, um eine Bewegung des ersten beweglichen Elements (15) zwischen der ersten und der zweiten Winkelposition zu bewirken, und wobei die Freigabe der Benutzersteuerung im Gebrauch veranlasst, dass sich das erste Schneidvorrichtungselement (15) in die erste Winkelposition bewegt.

8. Vegetationsschneidwerkzeug nach einem der Ansprüche 4 bis 7, wobei die Kurbel (30) so mit der Stange (34) wirkverbunden ist, dass die Verbindung im Wesentlichen in Reihe mit dem Getriebeanordnungsabtriebslager (55) liegt.

9. Vegetationsschneidwerkzeug nach einem der vorhergehenden Ansprüche, wobei das Vegetationsschneidwerkzeug ferner einen oder mehrere Grenzschalter (45, 50) umfasst und wobei mindestens ein Grenzschalter (45, 50) die Energieversorgung des Motors (24) unterbricht, wenn sich das mindestens eine der Schneidvorrichtungselemente (15) aus der ersten Winkelposition in die zweite Winkelposition bewegt hat.

10. Vegetationsschneidwerkzeug nach einem der vorhergehenden Ansprüche, ferner mit zwei Grenzschaltern (45, 50), die jeweils einem Relais zugeordnet sind, um elektrische Verbindungen zum Motor herzustellen oder zu unterbrechen, wobei die Relais ein einziges Zwillingsrelais sind.

11. Vegetationsschneidwerkzeug nach einem der Ansprüche 4 bis 10, wobei die Untersetzungsgetriebeanordnung (25) eine koaxial zum Motor montierte epizyklische Untersetzungsgetriebeanordnung ist.

12. Vegetationsschneidwerkzeug nach einem der vorhergehenden Ansprüche, wobei der Schneidkopf (14) und das Kraftübertragungsmittel eine einzige Arbeitseinheit umfassen.

## Revendications

1. Outil de découpe de végétaux comprenant une tête de coupe (14), un moteur (24) et des moyens de transmission pouvant être entraînés par le moteur ;
la tête de coupe (14) comprenant des premier et second éléments tranchants ayant des surfaces de coupe (23, 54) respectives, le premier élément tranchant (15) étant fixé de façon pivotante par rapport au second élément tranchant (20) ;
au moins le premier élément tranchant (15) pouvant être entraîné par les moyens de transmission entre une première position angulaire par rapport au second élément tranchant (20), où un espace est formé entre les surfaces de coupe (23, 54) respectives, et une seconde position angulaire par rapport au second élément tranchant (20), où l'espace entre les surfaces de coupe (23, 54) respectives est fermé ; et
les moyens de transmission (25) comprenant des moyens de mise en prise (40) associés au premier élément tranchant (15) et une manivelle (30) pouvant être entraînée entre des première et seconde positions angulaires de manivelle définies correspondant aux première et seconde positions angulaires, la manivelle (30) étant couplée en fonctionnement aux moyens de mise en prise (40) par une articulation (34) ;
**caractérisé en ce que** le premier élément tranchant (15) peut être démonté par sortie de prise des moyens de mise en prise (40) hors de l'articulation (34) ; l'articulation (34) est maintenue en place lors du retrait du premier élément tranchant (15) ; et **caractérisé en outre en ce que** la tête de coupe comprend une moulure de fixation de jonction (60) et **en ce que** l'articulation (34) est mobile à l'intérieur d'un canal (37) prévu dans la moulure de fixation de jonction (60), pour lui permettre de conserver sa position par rapport à la moulure de fixation de jonction (60).

2. Outil de découpe de végétaux selon la revendication 1, dans lequel l'articulation (34) comprend en outre une patte d'articulation (36) intégrée, formée avec elle, la patte d'articulation (36) étant mobile à l'intérieur du canal (37) dans la moulure de fixation de jonction (60).

3. Outil de découpe de végétaux selon la revendication 1 ou 2, dans lequel l'articulation (34) comprend une ouverture d'articulation (52) placée en fonctionnement au niveau d'une extrémité supérieure qui est mise en prise de façon à pouvoir tourner avec la manivelle (30) pour permettre une mise en prise mécanique entre l'articulation (34) et la manivelle (30).

4. Outil de découpe de végétaux selon l'une quelconque des revendications 1 à 3, dans lequel les moyens de transmission comprennent en outre un ensemble d'engrenage de réduction (25), comprenant un palier de sortie (55) pouvant être entraîné par le moteur et dans lequel la manivelle peut être entraînée par l'ensemble d'engrenage (25).

5. Outil de découpe de végétaux selon l'une quelconque des revendications 1 à 4, dans lequel les moyens de mise en prise comprennent une patte (40) formée sur le premier élément tranchant (15).

6. Outil de découpe de végétaux selon la revendication 5, dans lequel l'articulation comprend une fente (35) pouvant entrer en prise, en fonctionnement, avec la patte (40).

7. Outil de découpe de végétaux selon l'une quelconque des revendications précédentes, comprenant en outre une commande d'utilisateur pour permettre d'activer de façon non continue le moteur (24), dans lequel la commande d'utilisateur peut être déplacée entre des première et seconde positions pour déplacer le premier élément mobile (15) entre les première et seconde positions angulaires, et dans lequel le relâchement de la commande d'utilisateur provoque, en fonctionnement, le déplacement du premier élément tranchant (15) permettant de revenir à la première position angulaire.

8. Outil de découpe de végétaux selon l'une quelconque des revendications 4 à 7, dans lequel la manivelle (30) est reliée en fonctionnement à l'articulation (34) de telle sorte que la connexion est sensiblement alignée avec le palier de sortie (55) de l'ensemble d'engrenage.

9. Outil de découpe de végétaux selon l'une quelconque des revendications précédentes, dans lequel l'outil de découpe de végétaux comprend en outre un ou plusieurs interrupteurs de fin de course (45, 50) et dans lequel au moins un interrupteur de fin de course (45, 50) bloque l'alimentation en courant du moteur (24) lorsque l'au moins un desdits éléments tranchants (15) est déplacé de ladite première position angulaire dans ladite seconde position angulaire.

10. Outil de découpe de végétaux selon l'une quelconque des revendications précédentes, comprenant en outre deux interrupteurs de fin de course (45, 50) donc chacun est associé à un relais pour connecter ou déconnecter les connexions électriques du moteur, dans lequel les relais prennent la forme d'un seul relais jumeau.

11. Outil de découpe de végétaux selon l'une quelconque des revendications 4 à 10, dans lequel l'ensemble d'engrenage de réduction (25) est un ensemble d'engrenage de réduction épicyclique fixé coaxialement au moteur.

12. Outil de découpe de végétaux selon l'une quelconque des revendications précédentes, dans lequel la tête de coupe (14) et les moyens de transmission comprennent une seule unité de travail.
